# EUROPÄISCHE PATENTSCHRIFT

(11) **EP 2 720 915 B1**
(45) Veröffentlichungstag und Bekanntmachung des Hinweises auf die Patenterteilung: **12.08.2015**
(21) Anmeldenummer: 12718957.9
(22) Anmeldetag: 26.04.2012
(51) Int. Cl.: B60S 1/38

(54) **WISCHBLATT ZUM REINIGEN VON SCHEIBEN INSBESONDERE VON KRAFTFAHRZEUGEN**
WIPER BLADE FOR CLEANING WINDOWS, IN PARTICULAR OF MOTOR VEHICLES
BALAI D'ESSUIE-GLACE DESTINÉ À NETTOYER DES VITRES, EN PARTICULIER DE VÉHICULES AUTOMOBILES

(30) Priorität: 15.06.2011 DE 102011077516
(43) Veröffentlichungstag der Anmeldung: 23.04.2014
(73) Patentinhaber: Robert Bosch GmbH, 70442 Stuttgart (DE)
(72) Erfinder: ERNST, Waldemar, 71665 Vaihingen/Enz (DE)
(86) Internationale Anmeldenummer: PCT/EP2012/057656
(87) Internationale Veröffentlichungsnummer: WO 2012/171700

(56) Entgegenhaltungen:
- EP-A1- 1 564 094
- EP-A2- 2 287 052

## Beschreibung

### Stand der Technik

Bei Wischblättern der im Oberbegriff des Anspruchs 1 bezeichneten Art soll das Tragelement über das gesamte vom Wischblatt bestrichene Wischfeld eine möglichst gleichmäßige Verteilung des vom Wischerarm ausgehenden Wischblatt-Anpressdrucks an der Scheibe gewährleisten. Durch eine entsprechende Krümmung des unbelasteten Tragelements - also wenn das Wischblatt nicht an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärische gekrümmten Fahrzeugscheiben bei jeder Wischblattposition ändern. Die Krümmung des Wischblatts muss also etwas stärker sein als die im Wischfeld an der zu wischenden Scheibe gemessene stärkste Krümmung. Am Tragelement ist eine Anschlussvorrichtung befestigt, über die die Verbindung zum Wischerarm hergestellt wird.

Aus der EP 1564094 B1 ist es bekannt, die Anschlussvorrichtung mittels Fortsätzen, die sich durch das Tragelement hindurch erstrecken und auf einer gegenüberliegenden Seite aufgeweitet sind, am Tragelement zu befestigen. Da in diesem Bereich die während des Wischbetriebs auftretenden wechselnden Biegungen erheblich sind, sind auch die Fortsätze extrem belastet. Beliebig vergrößern lassen sich die Fortsätze nicht, da dann auch die notwendigen Durchbrüche durch das Tragelement vergrößert werden müssen, was zu einer deutlichen Schwächung des Tragelements an diesem hochsensiblen Bereich führen würde.

### Vorteile der Erfindung

Das erfindungsgemäße Wischblatt mit den Merkmalen des Hauptanspruchs hat den Vorteil, dass Relativbewegungen zwischen den Fortsätzen und dem Tragelement durch die zusätzlichen Unterlegkörper zumindest teilweise aufgenommen werden können, was zu einer Entlastung der kerbgefährdeten Bereiche führt. Die Durchmesser der Fortsätze und damit die der Durchbrüche können auf einem Maß gehalten werden, das hauptsächlich durch die auftretenden Zugspannungen und weniger durch die Scherspannungen bestimmt sind.

Durch die in den Unteransprüchen aufgeführten Maßnahmen ergeben sich vorteilhafte Weiterbildungen des erfindungsgemäßen Wischblatts. So stellt sich ein günstiger Reibwert ein, wenn die Unterlegkörper aus dem gleichen Material bestehen, wie das wischblattseitige Teil der Anschlussvorrichtung, das in aller Regel aus einem thermoplastischen Kunststoff besteht.

Sind die Unterlegkörper gelenkig und unverlierbar an das wischblattseitige Teil der Anschlussvorrichtung angeformt, erhöht sich die Prozesssicherheit bei der Herstellung des Wischblatts..

Durch eine dem Tragelement zugewandte konvex gehaltene Seite erhöht sich die Beweglichkeit, insbesondere die Möglichkeit des Tragelements, sich gegenüber den Fortsätzen zu biegen.

Die Freiheit der Biegebewegung zwischen Tragelement und dem wischblattseitigen Teil mit seinen Fortsätzen wird verbessert, wenn die dem Tragelement zugewandte Seite des wischblattseitigen Teils im Bereich der Fortsätze konvexe Bereiche aufweist. Diese ermöglichen zum einen eine gewisse Distanz zwischen dem Tragelement und der dem Tragelement zugewandten Seite des wischblattseitigen Teils, die entsprechend dem Krümmungsradius des Tragelements abhängig von der Wischposition auf der Scheibe größer oder kleiner sein kann. Zum anderen erlauben sie ein gewisses Abrollen des Tragelements auf dem konvexen Bereich. Diese konvexen Bereiche können auch als separate Unterlegkörper ausgebildet und damit besser anpassbar an die Einsatzbedingungen sein.

Das erfindungsgemäße Verfahren zum Herstellen eines Wischblatts zeichnet sich dadurch aus, dass es eine einfache Möglichkeit bietet, die erfindungsgemäßen Wischblätter herzustellen.

### Zeichnung

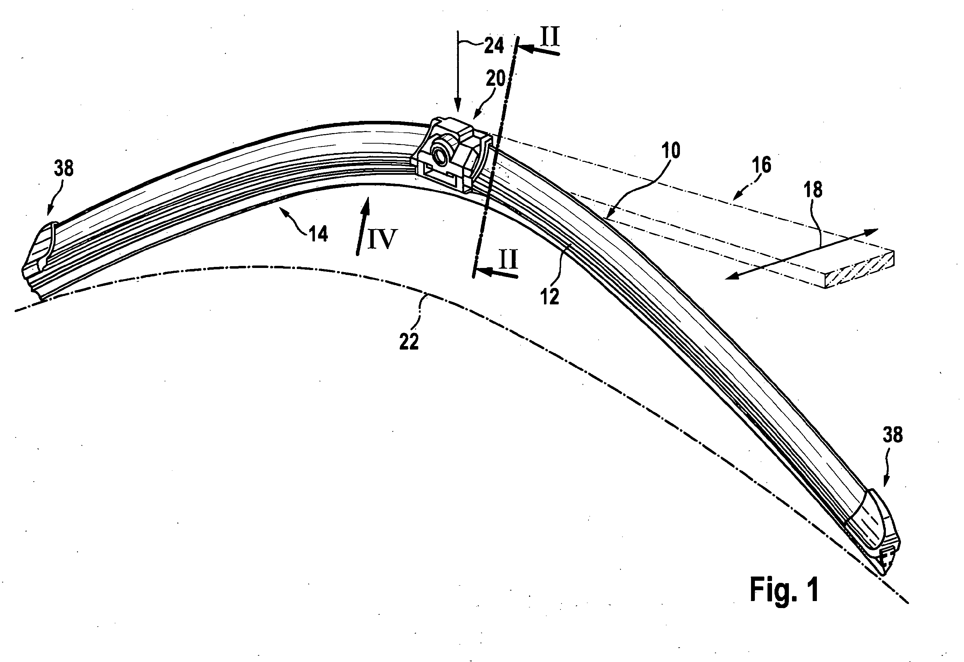

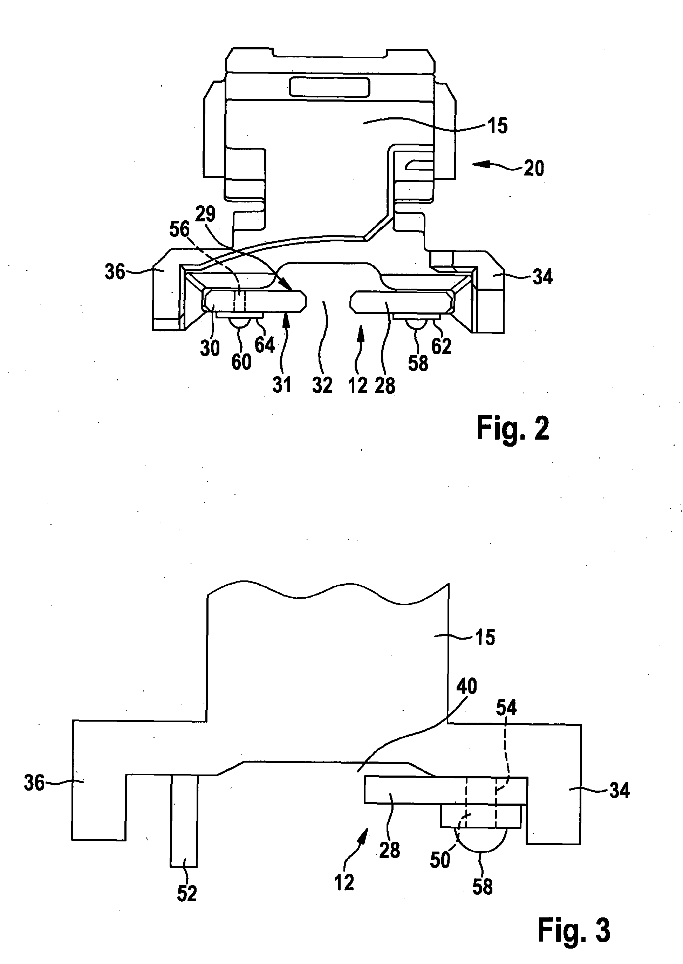

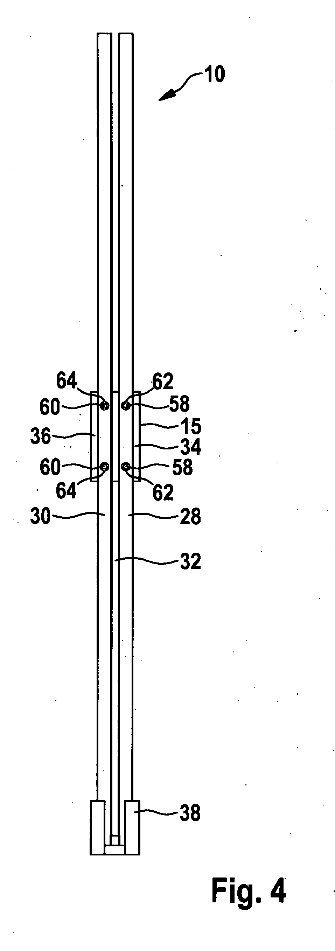

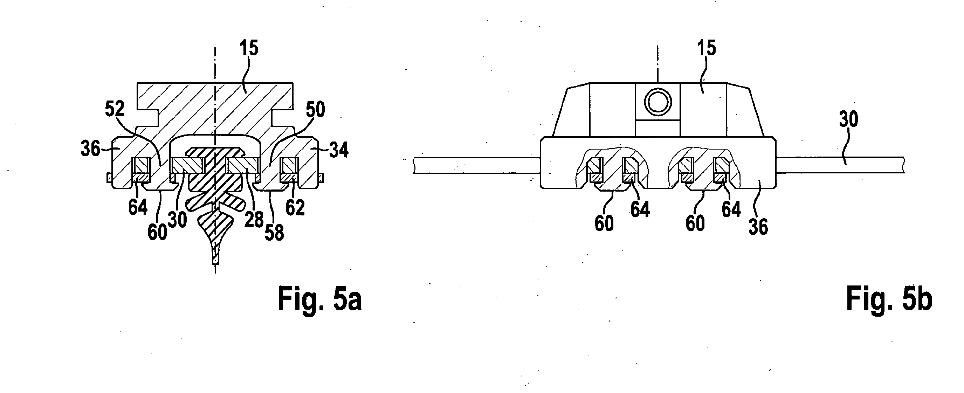

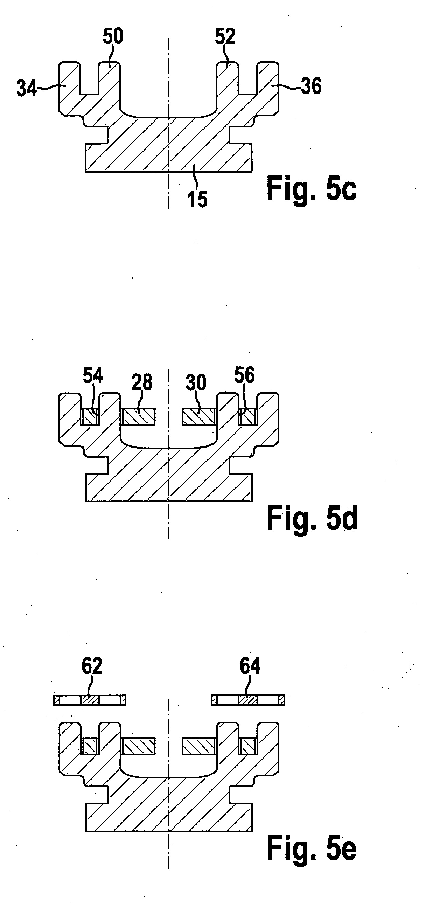

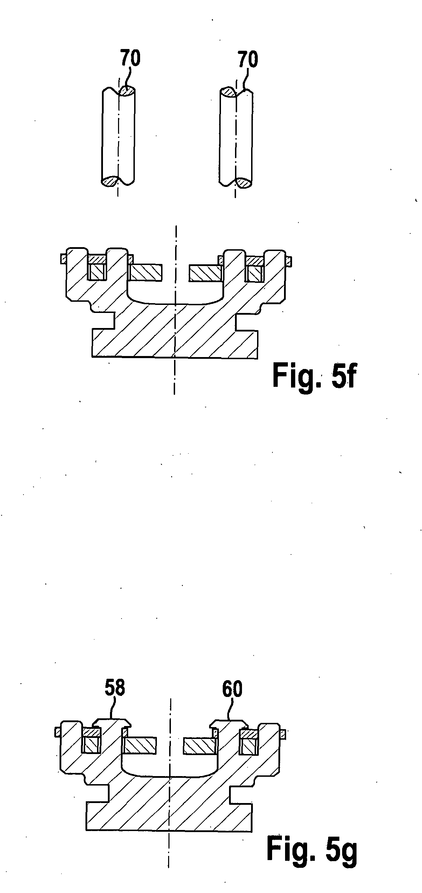

In der Zeichnung zeigen: Figur 1 ein erfindungsgemäßes Wischblatt in perspektivischer Darstellung mit strichpunktiert angedeutetem Wischerarm und strichpunktiert angedeuteter Oberfläche einer Windschutzscheibe, Fig. 2 zeigt eine Ansicht nach II-II in Fig. 1, Fig. 3 eine schematische Darstellung der Ansicht nach Fig. 2 mit nur einer Federschiene, Fig. 4 eine schematische Ansicht in Blickrichtung IV in Fig. 1 mit nur einer Endkappe und die Figuren 5 bis 7 Ausführungsvarianten jeweils in einer Detailansicht im Schnitt.

### Beschreibung der Ausführungsbeispiele

Ein in Figur 1 gezeigtes Wischblatt 10 weist ein bandartig langgestrecktes, federelastisches Tragelement 12 auf (Figuren 1 und 2), an dessen unteren, der Scheibe zugewandten Bandseite 13 eine langgestreckte, gummielastische Wischleiste 14 längsachsenparallel befestigt ist. An der oberen, von der Scheibe abgewandten Bandseite 11 des auch als Federschiene zu bezeichnenden Tragelements 12 ist in dessen Mittelabschnitt das wischblattseitige Teil 15 einer Anschlussvorrichtung 20 angeordnet, mit deren Hilfe das Wischblatt 10 gelenkig mit einem in Figur 1 strichpunktiert angedeuteten Wischerarm 16 lösbar verbunden werden kann. Der in Richtung eines Doppelpfeils 18 in Figur 1 pendelnd angetriebenen Wischerarm 16 ist in Richtung eines Pfeils 24 zur zu wischenden Scheibe - beispielsweise zur Windschutzscheibe eines Kraftfahrzeugs belastet - deren Oberfläche in Figur 1 durch eine strichpunktierte Linie 22 angedeutet ist. Da die Linie 22 die stärkste Krümmung der Scheibenoberfläche darstellen soll ist klar ersichtlich, dass die Krümmung des mit seinen beiden Enden an der Scheibe anliegenden, noch unbelasteten Wischblatts stärker ist als die maximale Scheibenkrümmung (Figur 1). Unter dem Anpressdruck (Pfeil 24) legt sich das Wischblatt 10 mit seiner Wischlippe 26 über seine gesamte Länge an der Scheibenoberfläche 22 an. Dabei baut sich im zumeist aus Metall gefertigten, federelastischen Tragelement 12 eine Spannung auf, welche für eine ordnungsgemäße Anlage der Wischleiste 14 beziehungsweise der Wischlippe 26 über deren gesamte Länge an der Scheibenoberfläche 22 sowie für eine gleichmäßige Verteilung des Anpressdrucks (Pfeil 24) sorgt.

Im Folgenden soll nun auf die besondere Ausgestaltung des erfindungsgemäßen Wischblatts näher eingegangen werden.

In Fig. 2 ist erkennbar, dass das Tragelement 12 aus zwei, voneinander getrennten Federschienen 28 und 30 aufgebaut ist, die zueinander beabstandet sind und einen Spalt 32 begründen. Das wischblattseitige Teil 15 der Anschlussvorrichtung 20 weist in einem unteren Bereich zwei Aufnahmen 34 und 36 auf, in denen die Federschienen 28 und 30 jeweils seitlich anliegen. Die Aufnahmen 34 und 36 liegen somit an den Seiten der Federschienen 28 und 30 an, während der mit dem Wischerarm 16 korrespondierende Teil der Anschlussvorrichtung 20 auf der konvexen Seite 29 des Tragelements 12 angeordnet ist und die konkave Seite 31 dieser gegenüberliegt.

In Fig. 3 ist das wischblattseitige Teil 15 der Anschlussvorrichtung 20 schematisch dargestellt, wobei in der Aufnahme 34 die entsprechende Federschiene 28 eingezeichnet ist, während die Federschiene 30, nicht in der entsprechenden Aufnahme 36 liegt. Im Bereich oberhalb der Federschienen 28 und 30 sowie oberhalb des Spalts 32 weist das Teil 15 eine Aussparung 40 auf, in die, wenn das Wischblatt 10 zusammengebaut ist, ein Kopfteil einer Wischleiste zu liegen kommt. Im Bereich zwischen den Aufnahmen 34 und 36 sind Fortsätze 50 und 52 angeordnet, die sich ausgehend vom Teil 15 parallel zu den Aufnahmen 34 und 36 in Richtung der aufzunehmenden Federschienen 28 und 30 erstrecken. Das Tragelement 12 bzw. dessen Federschienen 28 und 30 sind deshalb mit Durchbrüchen 54 und 56 zur Aufnahme der Fortsätze 50 und 52 ausgestattet.

Das äußere Ende der Fortsätze 50 und 52 ist jeweils zu einem Kopf 58 beziehungsweise 60 (Fig. 2) geformt. Zwischen jedem Kopf 58, 60 und der jeweiligen Federschiene 28, 30 ist jeweils ein Unterlegkörper 62, 64 eingelegt.

Das in Fig. 4 von unten dargestellte Wischblatt 10, das ohne die Wischleiste 14 bzw. Wischerlippe 26 gezeichnet ist, zeigt die Federschienen 28 und 30, den Spalt 32 sowie die Aufnahmen 34 und 36 des wischblattseitigen Teils 15 der Anschlussvorrichtung 15. Es ist erkennbar, dass bei dieser Ausführungsform des Wischblatts 10 die Federschienen 28 und 30 vollständig voneinander getrennt sind und lediglich durch das wischblattseitige Teil 15 der Anschlussvorrichtung 20 bzw. über Endkappen 38, von denen in Fig. 4 nur eine an einem Ende gezeichnet ist, zusammengehalten werden. Es sind ferner die unteren Enden der Fortsätze 50 und 52 erkennbar, die durch die Federschienen 28 und 30 ragen. Wie bereits in Fig. 2 erkennbar, weisen die Fortsätze 50 und 52 jeweils einen vergrößerten Kopf 58 und 60 auf, über den die Federschienen 28 und 30 formschlüssig mit dem Teil 15 verbunden sind. Die Köpfe 58 und 60 werden in der Regel durch Wärmezufuhr an die äußeren Enden der Fortsätze 50 und 52 erzeugt.

Zwischen den Köpfen 58 und 60 und dem Federschienen 28 und 30 erkennt man als einen äußeren Ring die Unterlegkörper 62 und 64. In diesem Ausführungsbeispiel sind die Unterlegkörper 62, 64 ringförmig analog einer Unterlagescheibe ausgebildet. Sie bestehen in diesem Fall aus dem gleichen Material wie die Fortsätze 50, 52 und damit wie das wischblattseitige Teil 15 der Anschlussvorrichtung 20.

In den nachfolgenden Ausführungsvarianten sind gleiche Teile jeweils mit der gleichen Bezugsziffer benannt.

In Fig. 5 ist in den Teilbildern a und b eine Ausführung des erfindungsgemäßen Wischblatts 10 dargestellt, wobei 5 a der Darstellung nach Fig. 2 entspricht und 5 b eine Seitendarstellung teilweise ausgebrochen ist. Die Unterlegkörper 62, 64 übergreifen nicht nur die Fortsätze 50, 52 sondern auch einen Teil der Aufnahmen 34, 36, die dazu entsprechend ausgeschnitten sind.

In den Figuren 5c bis g sind einzelne Schritte zum Herstellen der Verbindung zwischen dem wischblattseitigen Teil 15 und den Federschienen 28, 30 des Tragelements 12 dargestellt. In 5 c ist das wischblattseitige Teil 15 mit seinen Fortsätzen 58, 60 nach oben weisend dargestellt. Über diese Fortsätze 58, 60 werden die Federschienen 28, 30 gestülpt, so, dass sie in ihren Durchbrechungen 54, 56 die Fortsätze 58, 60 aufnehmen (Fig. 5 d).

In Fig. 5e werden nun die Unterlegkörper 62, 64 über die Fortsätze 54, 56 gelegt, wobei in diesem Ausführungsbeispiel die Unterlegkörper 62, 64 zusätzliche Durchbrechungen zum Aufnehmen von Teilen der Aufnahmen 34, 36 aufweisen. Dies trägt zur Stabilisierung der Verbindung bei.

In Fig. 5f ist zu erkennen, dass das so vormontierte Gebilde mittels Ultraschall-Sonotroden 70 bearbeitet wird. In Fig. 5g ist zu erkennen, dass mittels der Sonotroden 70 die Köpfe 58 und 60 an die Fortsätze 52 und 60 angeformt wurden.

In weiteren, nicht mehr dargestellten Verfahrenschritten können nun die Wischleiste 14 eingezogen, die Endkappen 38 montiert und gegebenenfalls die Anschlussvorrichtung vervollständigt werden.

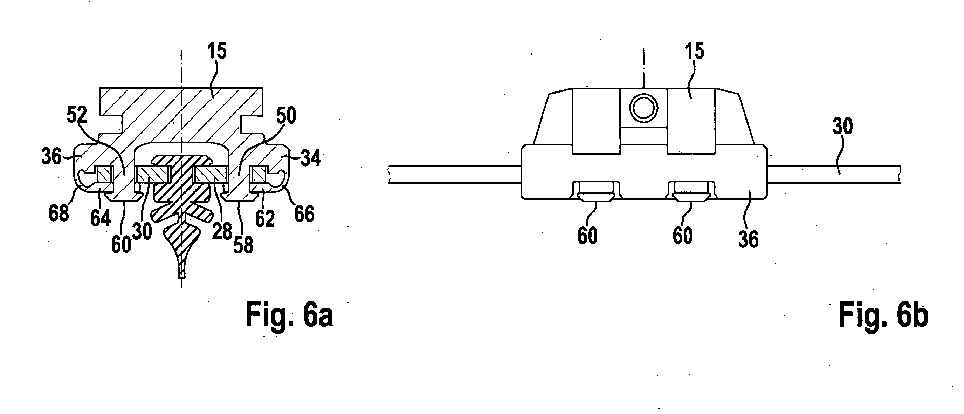

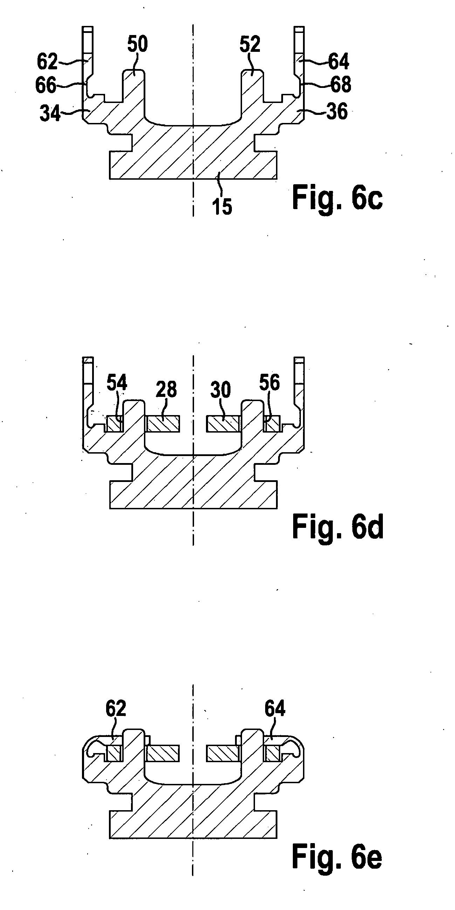

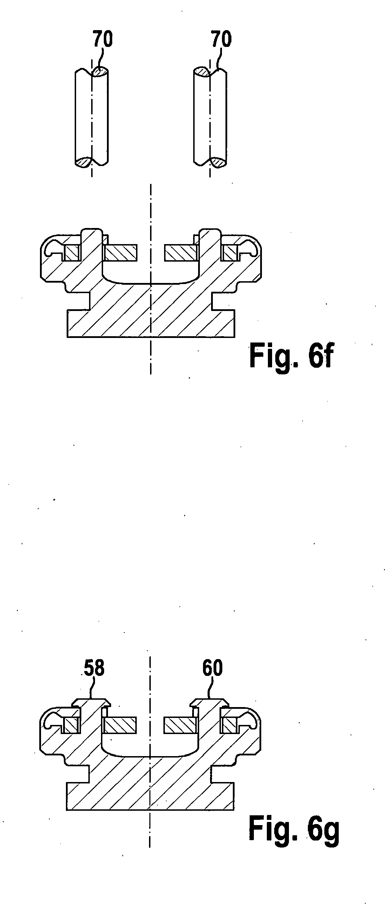

In Fig. 6 ist in den Teilbildern a und b eine weitere Ausführung des erfindungsgemäßen Wischblatts 10 dargestellt, wobei 6 a der Darstellung nach Fig. 2 entspricht und 6 b eine Seitendarstellung ist. Die Unterlegkörper 62, 64 sind mittels Filmscharniergelenke 66, 68 stoffschlüssig mit den Aufnahmen 34, 36 verbunden.

In den Figuren 6c bis g sind einzelne Schritte zum Herstellen der Verbindung zwischen dem wischblattseitigen Teil 15 und den Federschienen 28, 30 des Tragelements 12 dargestellt. In 6 c ist das wischblattseitige Teil 15 mit seinen Fortsätzen 58, 60 nach oben weisend dargestellt. Ferner sind an den äußeren Enden der Aufnahmen 34, 36 über Filmscharniergelenk den 66, 68 die Unterlegkörper 62, 64 angeformt. Über die Fortsätze 58, 60 werden die Federschienen 28, 30 gestülpt, so, dass sie in ihren Durchbrechungen 54, 56 die Fortsätze 58, 60 aufnehmen (Fig. 6 d).

In Fig. 6e werden nun die Unterlegkörper 62, 64 über die Fortsätze 54, 56 geklappt, wobei in diesem Ausführungsbeispiel die Unterlegkörper 62, 64 um die Filmscharniergelenk 66, 68 drehen. Die Unterlegkörper 62, 64 sind damit unverlierbar und deshalb montagesicher am wischblattseitigen Teil 15 befestigt.

In Fig. 6f ist zu erkennen, dass das so vormontierte Gebilde mittels Ultraschall-Sonotroden 70 bearbeitet wird. In Fig. 6g ist zu erkennen, dass mittels der Sonotroden 70 die Köpfe 58 und 60 an die Fortsätze 52 und 60 angeformt wurden.

In weiteren, nicht mehr dargestellten Verfahrenschritten können nun die Wischleiste 14 eingezogen, die Endkappen 38 montiert und gegebenenfalls die Anschlussvorrichtung vervollständigt werden.

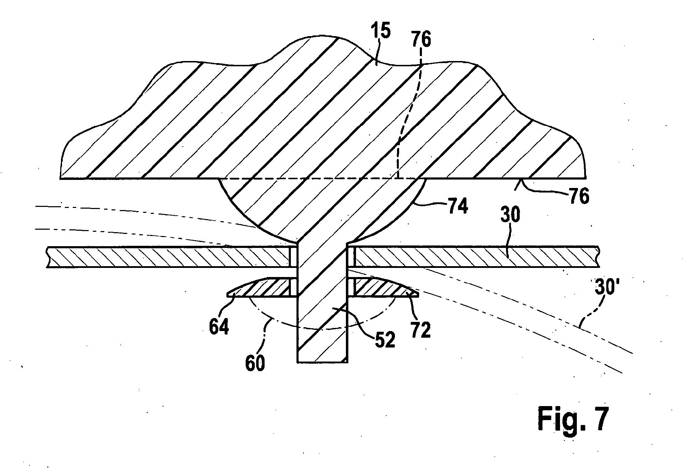

Wie in der Figur 7 dargestellt, kann in einer weiteren Ausführungsform die der Federschiene 28, 30 zugewandte Fläche 72 konvex ausgebildet sein. Dies verbessert die Beweglichkeit zwischen dem Fortsatz 52, 54 und der Federschiene 28, 30 und verringert die Kerbwirkung in diesem Bereich, ohne die Festigkeit oder Maßhaltigkeit negativ zu beeinflussen.

Unabhängig davon kann die dem Tragelement 12 zugewandte Seite des wischblattseitigen Teils 15 im Bereich der Fortsätze 50, 52 einen konvexen Bereich 74 aufweisen, über den ein Abrollen der Federschiene 28, 30 gegenüber dem wischblattseitigen Teil 15 möglich wird. Dieser Bereich bewirkt, dass zwischen der Federschiene 28, 30 und der der Federschiene zugewandten Seite 76 des wischblattseitigen Teils 15 ein Abstand entsteht, der den für die Änderung der Krümmung der Federschiene 28, 30 nötigen Freiraum schafft. In Figur 7 ist strichpunktiert übertrieben dargestellt, wie sich die Federschiene 30' mit angepasstem Krümmungsverlauf positioniert.

Die Ausbildung des konvexen Bereiches 74 kann unabhängig von den Unterlegkörpern 52, 54 erfolgen. Es ist auch möglich, dass der konvexe Bereich 74 nicht am wischblattseitigen Teil 15 angeformt sondern als separater Unterlegkörper ausgebildet ist, was in Figur 7 mit der Linie 76 angedeutet ist. Auf diese Weisle lässt sich - wie bereits erwähnt - die Kerbwirkung reduzieren.

In den Ausführungsbeispielen sind die Unterlegkörper als Einzelteile dargestellt, wobei jedem Fortsatz ein Unterlegkörper zugeordnet ist. Es ist jedoch auch möglich, die Unterlegkörper so auszugestalten, dass sie mehrere Durchbrechungen für mehrere Fortsätze aufweisen. Ferner ist es denkbar, nur zwei oder auch mehr als vier Fortsätze vorzusehen. Des Weiteren ist es möglich, die Unterlegkörper aus einem anderen Material beispielsweise aus einem Metall, einem glasfaserverstärkten Kunststoff oder dergleichen vorzusehen. Auch die Federschienen können aus homogenem oder geschichtetem Kunststoff oder dergleichen bestehen. Im Rahmen der Erfindung liegt es auch, Unterlegkörper oder konvexe Bereiche an allen Fortsätzen oder nur an ausgewählten vorzusehen.

## Patentansprüche

1. Wischblatt zum Wischen von Scheiben, insbesondere von Kraftfahrzeugscheiben, mit einem Tragelement (12) zum Aufnehmen einer Wischleiste (14), an dem eine Anschlussvorrichtung (20) befestigt ist, die ein wischblattseitiges Teil (15) mit Fortsätzen (50, 52) aufweist, die das Tragelement (12) zumindest bereichsweise hintergreifen, **dadurch gekennzeichnet, dass** zwischen der Hintergreifung der Fortsätze (50, 52) und dem Tragelement (12) zumindest ein Unterlegkörper (62, 64) angeordnet ist

2. Wischblatt nach Anspruch 1, **dadurch gekennzeichnet, dass** der Unterlegkörper (62, 64) aus dem gleichen Material wie das wischblattseitige Teil (15) besteht.

3. Wischblatt nach einem der vorhergehenden Ansprüche, **dadurch gekennzeichnet, dass** die Unterlegkörper (62, 64) gelenkig an das wischblattseitige Teil (15) angeformt sind.

4. Wischblatt nach einem der vorhergehenden Ansprüche, **dadurch gekennzeichnet, dass** die Unterlegkörper (62, 64) zumindest eine dem Tragelement (12) zugewandte konvexe Seite (72) aufweisen.

5. Wischblatt zum Wischen von Scheiben, insbesondere von Kraftfahrzeugscheiben, mit einem Tragelement (12) zum Aufnehmen einer Wischleiste (14), an dem eine Anschlussvorrichtung (20) befestigt ist, die ein wischblattseitiges Teil (15) mit Fortsätzen (50, 52) aufweist, die das Tragelement (12) zumindest bereichsweise hintergreifen, insbesondere nach einem der vorhergehenden Ansprüche, **dadurch gekennzeichnet, dass** die dem Tragelement (12) zugewandte Seite (76) des wischblattseitigen Teils (15) im Bereich der Fortsätze (50, 52) konvexe Bereiche (74) aufweist.

6. Wischblatt nach Anspruch 5, **dadurch gekennzeichnet, dass** der konvexe Bereich durch einen separaten Unterlegkörper gebildet ist.

7. Verfahren zum Herstellen eines Wischblatts nach einem der vorhergehenden Ansprüche, **dadurch gekennzeichnet, dass** das wischblattseitige Teil (15) der Anschlussvorrichtung (20) so auf eine konvexe Oberseite des Tragelements (12) gelegt wird, dass es mit seinen Fortsätzen (50, 52) das Tragelement (12) durchdringt, dass mindestens ein Unterlegkörper(62, 64) auf die Fortsätze (50, 52) gesteckt wird und dass die herausragenden Enden mittels Wärme und/oder Ultraschall verdickt werden.

## Claims

1. Wiper blade for wiping windows, in particular motor vehicle windows, having a supporting element (12) for receiving a wiper strip (14), to which supporting element (12) a connector apparatus (20) is fastened which has a wiper blade-side part (15) with projections (50, 52) which engage at least in regions behind the supporting element (12), **characterized in that** at least one bearing body (62, 64) is arranged between the engaged portion of the projections (50, 52) and the supporting element (12).

2. Wiper blade according to Claim 1, **characterized in that** the bearing body (62, 64) consists of the same material as the wiper blade-side part (15).

3. Wiper blade according to one of the preceding claims, **characterized in that** the bearing bodies (62, 64) are formed integrally on the wiper blade-side part (15) in an articulated manner.

4. Wiper blade according to one of the preceding claims, **characterized in that** the bearing bodies (62, 64) have at least one convex side (72) which faces the supporting element (12).

5. Wiper blade for wiping windows, in particular motor vehicle windows, having a supporting element (12) for receiving a wiper strip (14), to which supporting element (12) a connector apparatus (20) is fastened which has a wiper blade-side part (15) with projections (50, 52) which engage at least in regions behind the supporting element (12), in particular according to one of the preceding claims, **characterized in that** that side (76) of the wiper blade-side part (15) which faces the supporting element (12) has convex regions (74) in the region of the projections (50, 52).

6. Wiper blade according to Claim 5, **characterized in that** the convex region is formed by a separate bearing body.

7. Method for producing a wiper blade according to one of the preceding claims, **characterized in that** the wiper blade-side part (15) of the connector apparatus (20) is placed onto a convex upper side of the supporting element (12) in such a way that it penetrates the supporting element (12) with its projections (50, 52), **in that** at least one bearing body (62, 64) is plugged onto the projections (50, 52), and **in that** the protruding ends are thickened by means of heat and/or ultrasound.

## Revendications

1. Balai d'essuie-glace destiné à nettoyer des vitres, en particulier des vitres de véhicule automobile, comprenant un élément porteur (12) pour recevoir une raclette de balai d'essuie-glace (14), sur lequel est fixé un dispositif de raccordement (20) qui présente une partie du côté du balai d'essuie-glace (15) avec des saillies (50, 52) qui viennent en prise par l'arrière au moins en partie avec l'élément porteur (12), **caractérisé en ce qu'**entre l'engagement par l'arrière des saillies (50, 52) et l'élément porteur (12) est disposé au moins un corps sous-jacent (62, 64).

2. Balai d'essuie-glace selon la revendication 1, **caractérisé en ce que** le corps sous-jacent (62, 64) se compose du même matériau que la partie du côté du balai d'essuie-glace (15).

3. Balai d'essuie-glace selon l'une quelconque des revendications précédentes, **caractérisé en ce que** les corps sous-jacents (62, 64) sont formés de manière articulée sur la partie du côté du balai d'essuie-glace (15).

4. Balai d'essuie-glace selon l'une quelconque des revendications précédentes, **caractérisé en ce que** les corps sous-jacents (62, 64) présentent au moins un côté convexe (72) tourné vers l'élément porteur (12).

5. Balai d'essuie-glace destiné à nettoyer des vitres, en particulier des vitres de véhicule automobile, comprenant un élément porteur (12) pour recevoir une raclette de balai d'essuie-glace (14), sur lequel est fixé un dispositif de raccordement (20) qui présente une partie du côté du balai d'essuie-glace (15) avec des saillies (50, 52) qui viennent en prise par l'arrière au moins en partie avec l'élément porteur (12), en particulier selon l'une quelconque des revendications précédentes, **caractérisé en ce que** le côté (76) de la partie du côté du balai d'essuie-glace (15) tourné vers l'élément porteur (12) présente des régions convexes (74) dans la région des saillies (50, 52).

6. Balai d'essuie-glace selon la revendication 5, **caractérisé en ce que** la région convexe est formée par un corps sous-jacent séparé.

7. Procédé de fabrication d'un balai d'essuie-glace selon l'une quelconque des revendications précédentes, **caractérisé en ce que** la partie du côté du balai d'essuie-glace (15) du dispositif de raccordement (20) est placée sur un côté supérieur convexe de l'élément porteur (12) de telle sorte qu'elle traverse l'élément porteur (12) avec ses saillies (50, 52), **en ce qu'**au moins un corps sous-jacent (62, 64) est enfiché sur les saillies (50, 52) et **en ce que** les extrémités saillantes sont épaissies par de la chaleur et/ou par ultrasons.
